(19) Europäisches Patentamt
European Patent Office
Office européen des brevets

(11) Numéro de publication: **0 145 526**
**A2**

(12) # DEMANDE DE BREVET EUROPEEN

(21) Numéro de dépôt: **84402055.2**

(22) Date de dépôt: **12.10.84**

(51) Int. Cl.[4]: **C 08 L 83/04**
// C08K5/01 ,(C08L83/04, 83:07)

(30) Priorité: **26.10.83 FR 8317052**

(43) Date de publication de la demande: **19.06.85**
**Bulletin 85/25**

(84) Etats contractants désignés: **AT BE CH DE FR GB IT LI LU NL SE**

(71) Demandeur: **RHONE-POULENC SPECIALITES CHIMIQUES, "Les Miroirs" 18, Avenue d'Alsace, F-92400 Courbevoie (FR)**

(72) Inventeur: **Cavezzan, Jacques, Parc Tête d'Or 4, allée Marcel Achard, F-69100 Villeurbanne (FR)**

(74) Mandataire: **Seugnet, Jean Louis et al, RHONE-POULENC RECHERCHES Service Brevets Chimie et Polymères 25, quai Paul Doumer, F-92408 Courbevoie (FR)**

(54) **Agent inhibiteur allénique pour catalyseur d'un métal du groupe du platine et compositions organopolysiloxaniques le contenant.**

(57) La présente invention concerne une composition organopoly-siloxanique comportant un organopolysiloxane ayant au moins un radical vinyle, un organohydropolysiloxane, un catalyseur complexe d'un métal du groupe du platine et au moins un inhibiteur qui est un composé organique allénique ayant un point d'ébullition d'au moins 25°C.

Les compositions selon l'invention sont utilisables pour rendre un matériau non adhérent à d'autres matériaux auxquels il adhérent normalement.

EP 0 145 526 A2

# AGENT INHIBITEUR ALLENIQUE POUR CATALYSEUR D'UN METAL DU GROUPE DU PLATINE ET COMPOSITIONS ORGANOPOLYSILOXANIQUES LE CONTENANT

La présente invention concerne un agent inhibiteur allènique pour catalyseur d'un métal du groupe du platine et les compositions de siloxane le contenant. Plus precisément, l'invention concerne une composition organopolysiloxanique qui soit stable durant un certain temps à température ambiante, cette duree etant adaptée en fonction du domaine d'utilisation de la composition, et qui durcisse sous l'effet d'un traitement approprié (traitement thermique, traitement aux rayons U.V., infra-rouge, a un rayonnement ionisant, etc...). Ce durcissement est effectué par les réactions bien connues de groupements ≡ SiH avec des radicaux d'oléfines non saturées liés au silicium catalysées par un metal du groupe du platine.

De telles compositions sont en géneral conservées avant emploi sous forme de compositions bicomposantes ou à 2 emballages, les 2 composants sont mélangès juste avant leur utilisation sous forme de composition unique et le problème principal à résoudre consiste essentiellement à éviter une gelification prématurée de ces compositions. Il est donc nécessaire que ces compositions comportent un inhibiteur du catalyseur qui inhibe ou retarde l'activité catalytique à température ambiante mais dont l'action inhibitrice disparaisse lors du traitement de réticulation de la composition.

Un but de la présente invention est de proposer une composition organopolysiloxanique pouvant être stockée sous une forme bicomposante comportant des radicaux ≡ SiH Si-vinyle et un catalyseur du groupe du platine qui lors de la mise en oeuvre après mélange des 2 composantes ne présente pas une gélification intempestive durant un temps approprié et présentant donc une vie en pot ("pot life") ou une vie de bain "bath life" convenable grâce à un inhibiteur approprié du catalyseur qui est un complexe d'un métal du groupe du platine présent dans la composition prête à l'emploi.

Un autre but de la présente invention est de proposer une composition organopolysiloxanique du type ci-dessus et dont l'inhibiteur pour certaines applications retarde efficacement l'action catalytique de réticulation du complexe catalytique à des températures inférieures aux températures de réticulation de ces compositions mais dont l'action inhibitrice est insuffisante aux températures de réticulation.

Un autre but de la présente invention est de proposer un nouvel inhibiteur du type ci-dessus qui soit non toxique et non lacrymogène.

Un autre but de la présente invention est de proposer des compositions d'enduction du type ci-dessus sans charge avec ou sans solvant pouvant rendre un materiau non adhérent tel que des feuilles métalliques, du verre des matières plastiques ou du papier à d'autres matériaux auxquels il adhérerait normalement et pouvant servir de composition conférant aux supports enduits, après réticulation de la composition de très bonnes propriétés antiadhérentes qui se conservent dans le temps, ces couches durcies résistant bien au frottement et, en particulier, n'étant pas enlevées par abrasion lors du passage de supports enduits sur les cylindres de renvoi des machines d'enduction ou d'adhésivation.

Dans ce qui suit les pourcentages et les parties sauf mention contraire sont exprimés en poids.

On a déjà proposé dans l'art antérieur de très nombreux inhibiteurs des catalyseurs du groupe du platine, ces inhibiteurs pouvant être utilisés seuls ou en combinaison et répondant partiellement aux buts visés par la présente invention.

On a ainsi notamment proposé des alkylthiourées (brevet US 3 188 299), des triallyisocyanurates (brevet US 3 882 083), des dialkylacétylènedicarboxylates (brevet US 4 347 346), des diallylmaléates (brevet US 4 256 870), un alkylvinylsiloxane linéraire ou cyclique comme décrit dans les brevets US 3 516 946 et 3 775 452 et dans le brevet français 1 548 775.

Dans le brevet US 3 445 420 on a proposé comme inhibiteur un composé organique acétylénique ayant un point d'ébullition d'au moins 25°C et au moins un groupement $- C \equiv C -$, ce composé organique

étant exempt d'azote, de carboxyle, de phosphore, de groupement mercapto et de groupements carbonyle en position α par rapport à des atomes de carbone aliphatiquement non saturés.

Or on s'est aperçu de façon tout-à-fait inattendue, ce qui fait précisément l'objet de la présente invention, que les composés organiques alléniques présentent une action inhibitrice dans des compositions organopolysiloxaniques SiH Si-vinyle particulièrement appropriée qui repondent aux buts vises par la présente invention. La présente invention concerne en effet une composition organopolysiloxanique comprenant :

(1) au moins un organopolysiloxane comportant par molécule au moins un radical vinyle, les autres radicaux étant des radicaux organiques mono- ou divalents n'exerçant pas d'influence défavorable sur l'activite catalytique

(2) au moins un organohydropolysiloxane renfermant au moins 3 atomes d'hydrogène liés aux silicium par molécule, les autres radicaux étant des radicaux organiques mono- ou divalents, de préférence exempts d'insaturation aliphatique et n'exerçant pas d'influence défavorable sur l'activité catalytique

(3) un catalyseur qui est un complexe d'un métal du groupe du platine en quantité suffisante pour faire réagir (1) et (2)

(4) au moins un agent inhibiteur choisi parmi un composé organique allénique ayant un point d'ébullition d'au moins 25°C et étant exempt d'atomes d'azote, de phosphore, de soufre et de groupement carboxyle en position α par rapport aux atomes de carbone aliphatiquement insaturés des doubles liaisons alléniques, ledit composé (4) étant en quantité suffisante pour inhiber la formation prématurée d'un gel à température ambiante mais en quantité insuffisante pour empêcher la réticulation à température plus élevée.

Plus précisément le composé (1) peut présenter des unités structurelles moyennes de formule :

$$(R)_e\ (R')_f\ Si\ O_{\frac{4-e-f}{2}} \qquad (1)$$

dans laquelle chaque R représente un radical choisi parmi un radical hydrocarboné monovalent ayant de 1 à 12 atomes de carbone, un radical hydrocarboné halogéné monovalent ayant de 1 à 12 atomes de carbone, un radical cyanoalkyle ayant de 3 à 4 atomes de carbone, un radical cycloalkyle ou halogénocycloalkyle ayant de 3 à 8 atomes de carbone et contenant de 1 à 4 atomes de chlore et/ou de fluor, un radical aryle, alkylaryle ou halogénoaryle ayant de 6 à 8 atomes de carbone et contenant de 1 à 4 atomes de chlore et/ou de fluor, R représente de préférence le radical méthyle et R' un radical alcényle choisi parmi un radical vinyle, allyle, méthallyle, butényle, pentényle, un radical alkynyle choisi parmi un radical éthynyle, propynyle, butynyle. De préférence R' représente le radical vinyle ou allyle et de façon encore plus préférée le radical vinyle e et f ont la même signification que pour la formule (II) ci-dessous.

Le composé (2) peut présenter des unités structurelles moyennes de formule :

$$(R)_e\ (H)_f\ SiO_{\frac{4-e-f}{2}} \qquad (II)$$

dans laquelle R a la même signification que ci-dessus et e a une valeur comprise entre 0,5 et 2,49 et f a une valeur comprise entre 0,001 et 1 inclus et la somme de e plus f est comprise entre 1,0 et 2,5 inclus.

Les polymères de formule (I) sont bien connus et sont décrits notamment dans les brevets US 3 220 972, 3 344 111 et 3 434 366.

Un copolymère typique a la formule (III) suivante :

$$H_2C = CH - \overset{R}{\underset{R}{Si}} - O \left[ \overset{R}{\underset{R}{SiO}} \right]_n \left[ \overset{R}{\underset{R'}{SiO}} \right]_m - \overset{R}{\underset{R}{Si}} - CH = CH_2 \quad (III)$$

dans laquelle R est de préférence un méthyle et R' un vinyle, la viscosité du polymère pouvant être comprise entre 40 et 100 000 m.Pa.s.à 25°C et n et m sont des nombres entiers choisis de telle sorte que la teneur pondérale en groupe vinyle ne dépasse pas 10 % en poids, de préférence 3 %, m pouvant être égal à 0.

Les organohydropolysiloxanes (2) englobent des produits fluides qui ne comportent pas de préférence de double liaison oléfinique mais qui comportent au moins 3 atomes d'hydrogène par molécule sous forme de groupement ≡Si-H. De tels composés (2) sont par exemple decrits dans les brevets US 3 220 972, 3 341 111 et 3 436 366.

L'organohydropolysiloxane (2) peut être de nature linéaire ou cyclique.

Un copolymère typique linéaire a la formule (IV) suivante:

$$CH_3-\overset{CH_3}{\underset{CH_3}{\overset{|}{\underset{|}{Si}}}}-O\left[\overset{CH_3}{\underset{CH_3}{\overset{|}{\underset{|}{Si}}}}\,O\right]_n\left[\overset{CH_3}{\underset{H}{\overset{|}{\underset{|}{Si}}}}\,O\right]_m-\overset{CH_3}{\underset{CH_3}{\overset{|}{\underset{|}{Si}}}}-CH_3 \qquad (IV)$$

la viscosite du polymère pouvant etre comprise entre 40 et 100 000 m.Pa.s. et n et m sont des nombres entiers choisis pour que la teneur en atomes d'hydrogène liés au silicium ne dépasse pas 1,67 % en poids et soit comprise de preférence entre 0,1 et 1,6 % en poids, n pouvant être égal à 0.

Le rapport des atomes d'hydrogène liés au silicium dans (2) à la somme des radicaux vinyle, alcényle et alkynyle liés au silicium dans (1) généralement est d'au moins 0,5 : 1.

Les compositions de l'invention présentent généralement une forte inhibition au durcissement quand elles sont utilisées telles quelles ou diluées dans un solvant. Quand elles sont dispersées ou diluées dans un solvant on utilise un solvant organique volatile compatible avec la composition, choisi par exemple parmi les alcanes, les coupes pétrolières renfermant des composés paraffiniques, le toluène, l'heptane, le xylène, l'isopropanol, la méthylisobutylcétone, le tétrahydrofuranne, le chlorobenzène, le chloroforme, le 1,1,1-trichloroéthane, les dérivés du monoéthylèneglycol et de méthylèneglycol.

De préférence le solvant forme de 50 à 99 % en poids de la dispersion.

Par évaporation du solvant de la dispersion, la composition durcit et ces dispersions sont donc utiles comme compositions de revêtement pour des objets en métal, bois, verre et des feuilles souples en papier, matiere plastique etc..

Les compositions selon l'invention peuvent être également utilisées comme composition sans solvant utilisable pour rendre un matériau non adhérent, tel que des feuilles métalliques, du verre, des matières plastiques ou du papier, a d'autres matériaux auxquels il adhérerait normalement et dans le cas d'une composition sans solvant la composition présente avantageusement une viscosité ne dépassant pas 5000 mPa.s. de préférence comprise entre 10 et 4000 mPa.s. a 25°C et le rapport des atomes d'hydrogène liés au silicium dans (2) à la somme des radicaux vinyle, alcényle et alkynyle liés au silicium dans (1) est d'au moins 0,5 : 1 et généralement inférieur à 2 : 1, ce rapport étant également applicable aux résines avec solvant.

L'invention vise donc egalement un procédé permettant de rendre des feuilles de matériau souple non adhérentes à des surfaces auxquelles elles adhèrent normalement, procédé caractérisé en ce qu'il consiste à appliquer une quantité de composition conforme à l'invention comprise généralement entre 0,1 et 5 g par $m^2$ de surface à enduire puis à réticuler la composition par tout moyen approprié.

Les temps de gélification de ces compositions diluées ou non à température ambiante peuvent être supérieurs à 20 heures et le catalyseur est réactivé à température plus élevée dépassant généralement 80°C.

Les compositions sans solvant, c'est-à-dire non diluées, sont appliquées à l'aide de dispositifs aptes à déposer, d'une façon uniforme, de faibles quantités de liquides. On peut utiliser à cet effet par exemple le dispositif nommé "Helio glissant" comportant en particulier 2 cylindres superposés : le rôle du cylindre placé le plus bas, plongeant dans le bac d'enduction où se trouvent les compositions, est d'imprégner en une couche très mince le cylindre placé le plus haut, le rôle de ce dernier est alors de déposer sur le papier les quantités désirées des compositions dont il est imprégné, un tel dosage est obtenu par réglage de la vitesse respective des deux cylindres qui tournent en sens inverse l'un de l'autre.

Les compositions diluées c'est-à-dire avec solvant peuvent être appliquées à l'aide des dispositifs utilisés sur les machines industrielles d'enduction du papier telles que le cylindre gravé "Mille points", le système nommé "Reverse Roll". Une fois déposées sur les supports les compositions sont durcies en quelques secondes par circulation dans des fours-tunnels chauffés vers 60-200°C, le temps de passage dans ces fours varie généralement de 2 à 30 secondes. Il est fonction, pour une longueur donnée des fours, de la vitesse à laquelle circulent les supports enduits (cette vitesse peut dépasser 200 mètres par minute) ; généralement un support constitué de matériaux cellulosiques circulent plus rapidement (par exemple à la vitesse de 3 m/seconde pour une température supérieure à 140°C) qu'un support à base de matière plastique. En effet ce dernier ne peut subir l'action de températures élevées il sera donc soumis à une température plus basse mais pendant une durée plus longue, par exemple il circulera à la vitesse de 0,75 m/seconde pour une température de l'ordre de 80°C.

Les quantités de compositions déposées sur les supports sont variables et s'échelonnent le plus souvent entre 0,1 et 5 $g/m^2$ de surface traitée. Ces quantités dépendent de la nature des supports et des propriétés antiadhérentes recherchées. Elles sont le plus souvent comprises entre 0,5 et 1,5 $g/m^2$ pour des supports non poreux.

Les compositions peuvent également contenir un composé cycloorganopolysiloxanique présentant des groupements vinyle et méthyle, de préférence sous forme d'un tétramère comme par exemple le tétraméthyl-1,3,5,7 tétravinyl-1,3,5,7 cyclotétrasiloxane.

Les compositions selon l'invention peuvent contenir en outre, pour 100 parties en poids de composés (1) et (2), de 1 à 20 parties en poids d'un polysiloxane linéaire jouant le rôle d'agent de couplage ou d'agent allongeur de chaîne et qui est un organosiloxane contenant deux atomes d'hydrogène liés au silicium par molécule, aucun atome de silicium n'ayant plus d'un atome d'hydrogène lié à lui et les 2 atomes d'hydrogène étant de préférence fixés sur les atomes de silicium terminaux du siloxane, les radicaux organiques de cet organosiloxane étant choisis parmi les radicaux méthyle, éthyle, phényle et trifluoro-3,3,3 propyle.

On peut utiliser comme catalyseur des complexes d'un métal du groupe de platine notamment les complexes de platine-oléfine comme décrit dans les brevets US 3 159 601 et 3 159 662, les produits de réaction des dérivés du platine avec des alcools des aldéhydes et des éthers décrits dans le brevet US 3 220 972, les catalyseurs platine-vinylsiloxane décrits dans les brevets français 1 313 846 et son addition 88 676 et le brevet français 1 480 409 ainsi que les complexes décrits dans les brevets US 3 715 334, 3 775 452 et 3 814 730, un catalyseur au rhodium tel que décrit dans les brevets US 3 296 291 et 3 928 629.

Les métaux préférés du groupe du platine sont le platine et le rhodium, le ruthénium bien que moins actif mais moins cher, est également utilisable.

Les inhibiteurs selon l'invention donnent des résultats particulièrement intéressants avec des complexes platine-vinylsiloxane en particulier le complexe de divinyl-1,3 tétraméthyl-1,1,3,3 disiloxane et des complexes platine-méthylvinylcyclotétrasiloxane en particulier le complexe platine tétraméthyl-1,3,5,7 tétravinyl-1,3,5,7 cyclotétrasiloxane.

La quantité de complexes de catalyseur et d'inhibiteur à ajouter est fonction notamment des compositions, du type de catalyseur et de l'application visée et, l'homme de métier n'aura aucune difficulté à déterminer cette quantité. De façon générale, pour des compositions de revêtement la teneur en catalyseur est comprise entre environ 5 et 1000 ppm de préférence entre 20 et 100 ppm (calculés en poids de métal précieux).

La quantité d'inhibiteur est généralement comprise entre 0,01 et 5,0 %, pour les compositions de revêtement sans solvant elle est de préférence comprise entre 0,1 et 2,0 % par rapport au poids total de la composition.

On a découvert, conformément à l'invention, que de très petites quantités d'inhibiteur permettent d'allonger de façon exceptionnelle la "vie en pot" (pot-life) dans des compositions sans solvant destinées au traitement de l'anti-adhérence papier sans pour cela affecter le temps de durcissement de la composition

à chaud, ces compositions étant conservées à température ambiante ordinaire, c'est-à-dire inférieure à 40-45°C, de préférence inférieure à 25°C.

La réaction de réticulation qui a généralement lieu entre 60 et 130°C , de préférence entre 90 et 110°C, peut être initiée ou même totalement effectuée par des lampes infrarouges ou à l'aide d'un four à micro-ondes ou par rayonnement UV mais on peut utiliser dans tous les cas un four à air pulsé.

Dans le cadre de la présente invention, on peut utiliser n'importe quel inhibiteur (4) répondant à la définition générale donnée ci-dessus, et en particulier des dérivés organosiliciques.

Les inhibiteurs selon l'invention peuvent répondre à la formule générale (A) :

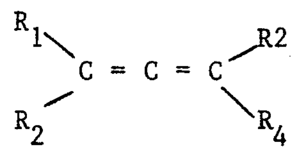

(A)

dans laquelle $R_1$, $R_2$, $R_3$ et $R_4$, identiques ou différents, représentent un atome d'hydrogène sous réserve qu'au moins un des radicaux $R_1$, $R_2$, $R_3$ et $R_4$ soit différent d'un atome d'hydrogène et ne représente pas alors le radical méthyle, un radical alkyle linéaire ou ramifié ayant de 1 à 10 atomes de carbone et pouvant être substitué par un atome d'halogène choisi parmi le chlore, le brome et le fluor ou par un radical hydroxyle, un radical alcényle linéaire ou ramifié ayant de 2 à 10 atomes de carbone, de préférence le radical vinyle, un radical alcoxyalkyle ayant de 1 à 6 atomes de carbone, un radical alcanoyloxyalkyle ayant de 1 à 6 atomes de carbone, un radical cycloalkyle ayant de 4 à 8 atomes de carbone, de préférence le radical cyclohexyle, un radical cycloalcényle ayant de 4 à 8 atomes de carbone de préférence le radical cyclohexényle, un radical aryle de préférence phényle, et un radical arylalkyle dont la partie alkyle a de 1 à 4 atomes de carbone, de préférence un radical benzyle, un radical organosilyle choisi parmi les radicaux trialkylsilyle ou trialcoxysilyle, la partie alkyle ayant de 1 à 4 atomes de carbone.

Parmi les produits répondant à la formule ci-dessus on peut utiliser les produits suivants :

(1) 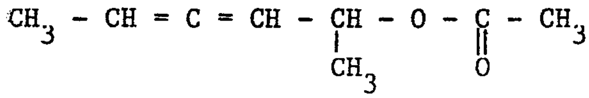

acétoxy-2 hexadiène-3,4

(2) $CH_3 - (CH_2)_4 - CH = C = CH - (CH_2)_4 - CH_3$

tridécadiène-6,7

(3) 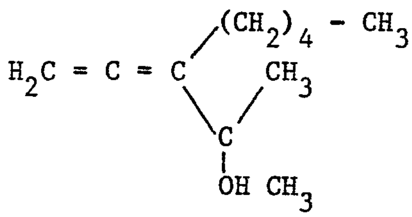

méthyl-2 pentyl-3 pentadiène-3,4 ol-2

(4) 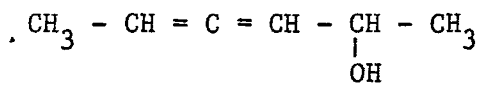

hydroxy-2 hexadiène-3,4

(5) 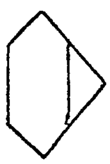 $- CH = C = CH - CH = CH - CH_3$

(pentadiényl-1,3 ydène)-7 bicycloheptane {4,1,0}

(6) 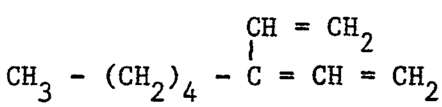

vinyl-3 octadiène-1,2

(7) 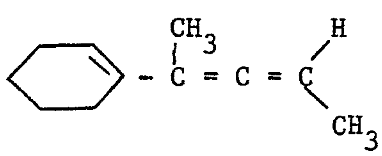

(cyclohexène-1') yle-2 pentadiène-2,3

(8) 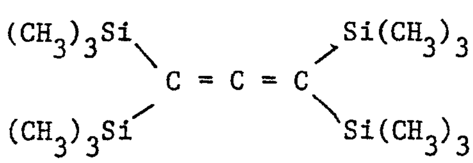

tétrakis (triméthylsilyl) allène

Les produits ci-dessus numérotés (1) à (8) et la plupart des produits répondant à la formule (A) sont des produits connus décrits dans la littérature.

La préparation de ces produits est décrite notamment dans les publications suivantes :

P. VERMEER et al, Journal of the Royal Netherlands Chemical Society, vol. 94, p. 112 (1975)

J.P. DULARE et al, Bulletin de la Société Chimique de France, p. 1119 (1974)

M. HUCHE, Bulletin de la Société Chimique de France, p. 2369 (1975) et

J.S. CORVIEL et al, Journal of the Chemical Society, Perkin I, p. 720 (1973).

Dans le cas où les produits répondant à la formule (A) sont des produits nouveaux, l'homme de l'art n'aura aucune difficulté à en effectuer la synthèse en appliquant les procédés décrits dans les documents cités ci-dessus et en consultant l'ouvrage de R.S. LANDOR "The Chemistry of the allenes", Academic Press (1982).

D'autres caractéristiques et avantages de la présente invention apparaîtront à la lecture des exemples suivants donnés à titre illustratif nullement limitatif.

<u>EXEMPLE 1</u> -

Un bain de traitement est préparé selon le mode operatoire suivant :

A 100 parties d'une composition de silicone renfermant :

a) 90,5 % d'un copolymère de polydiméthylsiloxane ayant des motifs vinyle dans la chaîne et à terminaison diméthylvinylsiloxy ayant environ 3 % en poids de groupements vinyle et présentant une viscosité d'environ 250 m.Pa.s. à 25°C,

b) 2,5 % de tetraméthyl-1,3,5,7 tètravinyl-1,3,5,7 cyclotétrasiloxane

c) 7 % d'un fluide polyméthylhydrosiloxanique à terminaison triméthylsiloxy utilisé comme agent de réticulation comprenant environ 1,5 % en poids d'atomes d'hydrogène liés au silicium, ayant une viscosité d'environ 20 mPa.s à 25°C.

On ajoute à ce bain :

- 60 ppm de platine ($3.10^{-4}$ at.g. de Pt/kg de composition)

sous la forme d'un complexe du platine préparé à partir de l'acide chloroplatinique et de divinyl-1,3 tétraméthyl-1,1,3,3 disiloxane, comme décrit dans le brevet US 3 814 730.

- entre 0,1 et 1,8 % en poids des composés alléniques (1) à (8) décrits ci-dessus.

On agite vigoureusement, à température ambiante, le mélange pendant quelques minutes et on dépose ensuite ce mélange (environ 1 g/$m^2$) sans utiliser de solvant sur du papier, au moyen d'une barre d'enduction et on fait durcir la composition silicone dans un four à circulation d'air forcé réglé à 110°C.

On a ainsi étudié le durcissement du revêtement de silicone en notant le temps de séjour minimum dans le four, nécessaire pour obtenir un revêtement bien durci. On mesure par ailleurs l'augmentation de viscosité de la composition en fonction du temps du bain catalysé pour juger de l'efficacité des composés alléniques en tant qu'inhibiteur. Les résultats obtenus sont rassemblés dans le tableau I ci-apres.

TABLEAU I

| numéro de de l'inhibiteur allenique | concentration de l'inhibiteur dans la résine en % | en (mole/kg) | temps de gélification du bain à 20°C en h et mn | réactivité à 110°C en secondes |
|---|---|---|---|---|
| néant | néant | | 30 mn | 10 |
| (1) | 0,9 % | $(6,5.10^{-2})$ | 3 h | 10 |
| (2) | 0,05 % | $(2,7.10^{-3})$ | 1 h | 15 |
| (2) | 1,8 % | $(1,0.10^{-1})$ | 9 h | 15 |
| (3) | 0,8 % | $(4,8.10^{-2})$ | 3 h 30 mn | 12 |
| (3) | 1,3 % | $(7,8.10^{-2})$ | 8 h | 15 |
| (4) | 0,3 % | $(3,0.10^{-2})$ | 3 h | 15 |
| (4) | 0,67 % | $(6,8.10^{-2})$ | 20-21 h | 15 |
| (5) | 0,5 % | $(3,0.10^{-2})$ | 5 h | 15 |
| (5) | 0,7 % | $(4,3.10^{-2})$ | 6 h 30 mn | 20 |
| (5) | 1,0 % | $(6,2.10^{-2})$ | 26 h | 20 |
| (6) | 0,1 % | $(7,3.10^{-3})$ | 3 h | 10 |
| (6) | 0,5 % | $(3,6.10^{-2})$ | 20 h | 10 |
| (6) | 0,7 % | $(5,0.10^{-2})$ | 30 h | 10 |
| (7) | 0,1 % | $(6,7.10^{-3})$ | 1 h | 10 |
| (7) | 1,3 % | $(8,7/10^{-2})$ | 3 h 30 mn | 10 |
| (8) | 1,85 % | $(1,7.10^{-1})$ | 1 h | 10 |

EXEMPLE 2 -

On reprend la composition de silicone de l'exemple 1 et on ajoute 60 ppm de rhodium, sous la forme d'un complexe de l'acétylacétonate de bis-(éthylène)rhodium $(C_2H_4)_2$ Rh $(CH_3$ COCH $COCH_3)$ décrit dans le brevet US 3 928 629 et 0,3 % de tridecadiène-6,7 {composé (2)}.

- Temps de durcissement à 110°C : 20 secondes
- Temps de gélification à 20°C : 12 heures
- Temps de gélification à 20°C sans inhibiteur : 30 minutes

REVENDICATIONS

1 - Composition organopolysiloxanique caractérisée en ce qu'elle comporte :

(1) au moins un organopolysiloxane comportant par molécule au moins un radical vinyle, les autres radicaux étant des radicaux organiques mono- ou divalents n'exerçant pas d'influence défavorable sur l'activité catalytique

(2) au moins un organohydropolysiloxane renfermant au moins 3 atomes d'hydrogène liés au silicium par molécule, les autres radicaux étant des radicaux organiques mono- ou divalents n'exerçant pas d'influence défavorable sur l'activité catalytique

(3) un catalyseur qui est un complexe d'un métal du groupe du platine en quantité suffisante pour faire réagir (1) et (2)

(4) au moins un inhibiteur choisi parmi un composé allénique ayant un point d'ébullition d'au moins 25°C et étant exempt d'atomes d'azote, de phosphore, de soufre et de groupement carboxyle en position α par rapport aux atomes de carbone aliphatiquement insaturés des doubles liaisons alléniques, ledit composé (4) étant en quantité suffisante pour inhiber la formation d'un gel à température ambiante, mais en quantité insuffisante pour empêcher la réticulation à température plus élevée .

2 - Composition selon la revendication (1), caractérisée en ce que l'inhibiteur (4) répond à la formule générale (A) :

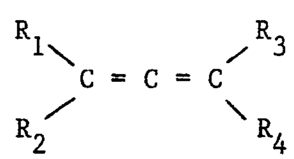

dans laquelle $R_1$, $R_2$, $R_3$ et $R_4$, identiques ou différents représentent un atome d'hydrogène sous réserve qu'au moins un des radicaux $R_1$, $R_2$, $R_3$ et $R_4$ soit différent d'un atome d'hydrogène et

ne représente pas alors le radical méthyle, un radical alkyle linéaire ou ramifié ayant de 1 à 10 atomes de carbone et pouvant être substitué par un atome d'halogène choisi parmi le chlore, le brome et le fluor ou par un radical hydroxyle, un radical alcényle linéaire ou ramifié ayant de 2 à 10 atomes de carbone, de préférence le radical vinyle, un radical alcoxyalcoyle ayant de 1 à 6 atomes de carbone, un radical cycloalkyle ayant de 4 à 8 atomes de carbone, de préférence le radical cyclohexyle, un radical cycloalcényle ayant de 4 à 8 atomes de carbone de préférence le radical cyclohexényle, un radical aryle de préférence phényle, et un radical arylalkyle dont la partie alkyle a de 1 à 4 atomes de carbone, de préférence un radical benzyle, un radical organosilyle choisi parmi les radicaux trialkylsilyle ou trialcoxysilyle, la partie alkyle ayant de 1 à 4 atomes de carbone.

3 - Composition selon l'une quelconque des revendications précèdentes caractérisée en ce qu'elle comporte :

(1) un organopolysiloxane présentant des unités structurelles moyennes de formule (I) :

$$(R)_e\,(R')_f\,SiO_{\frac{(4-e-f)}{2}} \qquad (I)$$

dans laquelle :

chaque R représente un radical choisi parmi un radical hydrocarboné monovalent ayant de 1 à 12 atomes de carbone, un radical halogéné monovalent ayant de 1 à 12 atomes de carbone et contenant de 1 à 4 atomes de chlore et/ou de fluor hydrocarboné, un radical cyanoalkyle ayant de 3 à 4 atomes de carbone, un radical alcanoyloxyalkyle ayant de 1 à 6 atomes de carbone, un radical cycloalkyle ou halogénocycloalkyle ayant de 3 à 8 atomes de carbone et contenant de 1 à 4 atomes de chlore et/ou de fluor, un radical aryle, alkylaryle ou halogénoaryle ayant de 6 à 8 atomes de carbone et contenant de 1 à 4 atomes de chlore et/ou de fluor,

R' représente un radical alcényle choisi parmi un radical vinyle, allyle, méthallyle, butényle, pentényle, un radical alkynyle choisi parmi un radical éthynyle, propynyle, butynyle, e et f ont la même signification que pour la formule (II) ci-dessous.

(2) un organohydropolysiloxane présentant des unités structurelles moyennes de formule (II) :

$$(R)_e\ (H)_f\ SiO_{\frac{(4-e-f)}{2}} \qquad (II)$$

dans laquelle R a la même signification que ci-dessus et e a une valeur comprise entre 0,5 et 2,49 et f a une valeur comprise entre 0,001 et 1 inclus et la somme de e plus f est comprise entre 1,0 et 2,5 inclus.

4 - Composition selon l'une quelconque des revendications précédentes, caractérisée en ce que l'organopolysiloxane 1 est un copolymère de formule (III) :

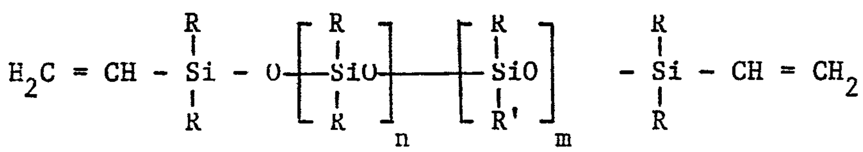 (III)

dans laquelle R est un méthyle et R' est un vinyle, la viscosité étant comprise entre 40 et 100 000 mPa.s. à 25°C et n et m sont des nombres entiers choisis de telle sorte que la teneur pondérale en groupe vinyle ne dépasse pas 10 % en poids, m pouvant être égal à 0.

5 - Composition selon l'une quelconque des revendications précédentes caractérisé en ce que l'organohydropolysiloxane répond à la formule (IV) suivante :

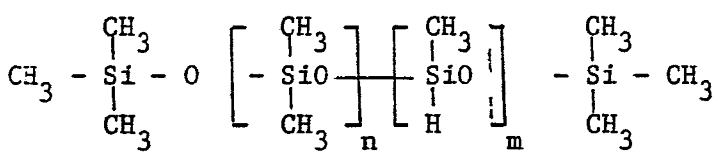 (IV)

la viscosité du polymère pouvant être comprise entre 40 et 100 000 mPa.s. et n et m sont des nombres entiers choisis pour que la teneur en atomes d'hydrogène liés au silicium ne dépasse pas 1,65 % en poids et soit comprise de préférence entre 0,1 et 1,6 % en poids, n pouvant être égal à 0.

6 - Composition selon l'une quelconque des revendications précédentes, caractérisée en ce qu'elle contient en outre pour 100 parties en poids de composés (1) et (2) de 1 à 20 parties en poids d'un polysiloxane linéaire contenant deux atomes d'hydrogène liés au silicium par molécule, aucun atome de silicium n'ayant plus d'un atome d'hydrogène lié à lui et les 2 atomes d'hydrogène étant de préférence fixés sur les atomes de silicium terminaux du siloxane, les radicaux organiques de cet organosiloxane étant choisis parmi

7 - Composition selon l'une quelconque des revendications précédentes, caractérisée en ce que le métal du catalyseur est choisi parmi le platine et le rhodium.

8 - Composition selon l'une quelconque des revendications précédentes, caractérisée en ce qu'elle est dispersée dans un solvant organique volatile compatible avec ladite composition et en ce que le rapport des atomes d'hydrogène liés au silicium dans l'organohydropolysiloxane (2) a la somme des radicaux vinyle, alcényle et alkynyle liés au silicium dans l'organopolysiloxane (1) est d'au moins 0,5 et inferieur à 2:1.

9 - Composition de revêtement sans solvant selon l'une quelconque des revendications 1 à 7, caractérisé en ce qu'elle présente une viscosité ne dépassant pas 5 000 mPa.s. à 25°C et en ce que le rapport des atomes d'hydrogène liés au silicium dans l'organohydropolysiloxane (2) à la somme des radicaux vinyle, alcényle et alkynyle liés au silicium dans l'organopolysiloxane (1) est d'au moins 0,5 : 1 et inférieur à 2 : 1.

10 - Procédé permettant de rendre des feuilles de matériau souples non adhérentes à des surfaces auxquelles elles adhèrent normalement , caractérisé en ce qu'il consiste à appliquer une quantité de composition telle que définie à la revendication 8 ou 9, entre 0,1 et 5 g par $m^2$ de surface à enduire puis à réticuler la composition.

11 - Matériaux enduit d'une composition telle que définie à l'une quelconque des revendications 1 à 9.